# EUROPEAN PATENT APPLICATION

(11) **EP 4 675 755 A1**
(43) Date of publication of application: **07.01.2026**
(21) Application number: 23924906.3
(22) Date of filing: 15.09.2023
(51) Int. Cl.: H01M 10/613, H01M 10/659, H01M 10/6569, H01M 10/6561, H01M 10/6567, H01M 10/6556, H01M 10/625

(54) **COOLING ASSEMBLY, BATTERY PACK COMPRISING SAME, AND VEHICLE**

(30) Priority: 28.02.2023 CN 202320458933 U
(71) Applicant: BYD Company Limited, Shenzhen, Guangdong 518118 (CN)
(72) Inventor: CAI, Yaomin, Shenzhen, Guangdong 518118 (CN); YUE, Qianli, Shenzhen, Guangdong 518118 (CN); LU, Zhipei, Shenzhen, Guangdong 518118 (CN); ZHONG, Rijun, Shenzhen, Guangdong 518118 (CN); ZHAO, Jiayu, Shenzhen, Guangdong 518118 (CN)
(74) Representative: Schott, Jakob Valentin
(86) International application number: PCT/CN2023/119190
(87) International publication number: WO 2024/178951

(57) **Abstract**

This application provides a cooling assembly, a battery pack having the same, and a vehicle. The cooling assembly includes a framework and a filler. The framework includes a plurality of holes penetrating the framework in a thickness direction of the framework. The filler fills the holes, the filler includes a matrix and a liquid phase change medium, and the matrix includes a lyophilic polymer material.

## Description

### CROSS-REFERENCE TO RELATED APPLICATION

This application claims priority to Chinese Patent Application No. 202320458933.X, filed on February 28, 2023 and entitled "COOLING ASSEMBLY, BATTERY PACK HAVING THE SAME, AND VEHICLE", which is incorporated herein by reference in its entirety.

### TECHNICAL FIELD

This application relates to the field of vehicle technologies, and in particular, to a cooling assembly, a battery pack having the same, and a vehicle.

### BACKGROUND

In the related technology, polymer materials with a lyophilic three-dimensional network structure, such as hydrogels, can absorb and retain a large amount of water (up to 99%) or other liquids due to a cross-linked network structure and a large quantity of lyophilic groups. While retaining a large amount of liquid, a polymer network structure can maintain its integrity, preventing issues such as liquid flow. These properties give hydrogels great potential in harnessing cooling power of water. However, although lyophilic polymer materials such as hydrogels restrict water flow, their poor formability and mechanical properties lead to deformation under gravity or inertia, affecting their use between batteries and reducing their heat dissipation effect on the batteries.

### SUMMARY

This application aims to resolve, at least to some extent, one of the technical problems in the related technology. To this end, an objective of this application is to provide a cooling assembly. The cooling assembly in this application is not prone to deformation and has high heat dissipation efficiency, fast heat dissipation response, and good exhaust effect.

The cooling assembly according to some embodiments of this application includes: a framework, where the framework includes a plurality of holes penetrating the framework in a thickness direction of the framework; and a filler, where the filler fills the holes, the filler includes a matrix and a liquid phase change medium, and the matrix includes a lyophilic polymer material.

In the cooling assembly in this application, the filler is disposed in the hole of the framework. The framework supports the matrix and plays a role in shaping the filler to prevent the filler from deformation. The filler is filled in the framework. The cooling assembly may be placed horizontally or vertically based on a structure of a to-be-cooled heat dissipation component, so that the cooling assembly is closer to a surface of the to-be-cooled heat dissipation component, thereby improving a response speed and a response time of heat dissipation. In addition, the filler includes the liquid phase change medium, and a process in which the liquid phase change medium absorbs heat includes two processes: single-phase heat absorption and latent heat of vaporization. The latent heat of vaporization is high and can quickly absorb a large amount of heat. Therefore, when the cooling assembly is disposed on a surface of a battery, the cooling assembly can quickly and efficiently absorb heat dissipated by a single cell due to thermal runaway caused by overcharging, collision, or the like. In addition, the hole in the framework penetrates the framework to further improve exhaust effect.

According to some embodiments of this application, any two adjacent holes in the framework are directly connected.

According to some embodiments of this application, the cooling assembly further includes an encapsulation film, where an accommodation cavity is formed inside the encapsulation film, and the framework is disposed within the accommodation cavity.

According to some embodiments of this application, the encapsulation film is provided with an opening configured to communicate the accommodation cavity with the outside of the encapsulation film.

According to some embodiments of this application, the encapsulation film has a first surface and a second surface at two ends in an extension direction of the framework, and the opening is provided on the first surface and/or the second surface.

According to some embodiments of this application, a dimension of the framework between two adjacent holes in the extension direction of the framework is a, and satisfies 0.05 mm ≤ a ≤ 10 mm.

According to some embodiments of this application, a dimension of the framework in the thickness direction of the framework is b, and satisfies 1.5 mm ≤ b ≤ 2.5 mm.

According to some embodiments of this application, the encapsulation film includes a plurality of the frameworks, and the plurality of the frameworks are disposed in the thickness direction of the framework.

According to some embodiments of this application, the framework is a flexible framework.

According to some embodiments of this application, a material forming the flexible framework is one of paper, aluminum, or fiber.

According to some embodiments of this application, the matrix is one of starch, cellulose, polyethylene glycol, sodium alginate, hydrogel, or sodium polyacrylate.

In another aspect of this application, a battery pack is provided, including a plurality of cells and the aforementioned cooling assembly. Therefore, the battery pack has all the features and advantages of the aforementioned cooling assembly. Details are not described herein again. In general, the battery pack at least has the advantage of higher safety.

According to some embodiments of this application, the cooling assembly is disposed on at least one surface of the cell.

According to some embodiments of this application, a surface of the cell includes a first area, a second area, and a third area. The first area and the third area are disposed at two ends of the second area in an extension direction of the cell, and the cooling assembly is disposed in at least one of the first area and the third area.

In still another aspect of this application, a vehicle is provided, including the aforementioned battery pack. Therefore, the vehicle has all the features and advantages of the aforementioned battery pack. Details are not described herein again. In general, the vehicle at least has the advantage of higher safety.

### BRIEF DESCRIPTION OF DRAWINGS

The above and/or additional aspects and advantages of this application will become apparent and easily understood from descriptions of embodiments with reference to the following drawings, in which:
FIG. 1 shows a diagram of a structure of a cooling assembly according to an embodiment of this application;
FIG. 2 shows a diagram of a structure of a flexible framework according to an embodiment of this application;
FIG. 3 shows a diagram of a structure of an encapsulation film from one perspective according to an embodiment of this application;
FIG. 4 shows a diagram of a structure of an encapsulation film from another perspective according to an embodiment of this application;
FIG. 5 shows a diagram of a structure of a surface of a cell according to an embodiment of this application; and
FIG. 6 shows a diagram of a structure of a vehicle according to an embodiment of this application.

### Reference numerals:

1: cooling assembly; 11: framework; 111: hole; 12: filler; 13: encapsulation film; 131: opening; 132: accommodation cavity; 2: cell; 21: first area; 22: second area; 23: third area; 100: battery pack; 1000: vehicle.

### DESCRIPTION OF EMBODIMENTS

The following describes in detail embodiments of this application. Embodiments described below are exemplary and are merely used to explain this application, and should not be construed as limiting this application. If no specific techniques or conditions are specified in embodiments, the techniques or conditions described in literature in the art or product instructions shall be followed. Reagents and instruments used without indicating a manufacturer are all conventional products that can be purchased commercially.

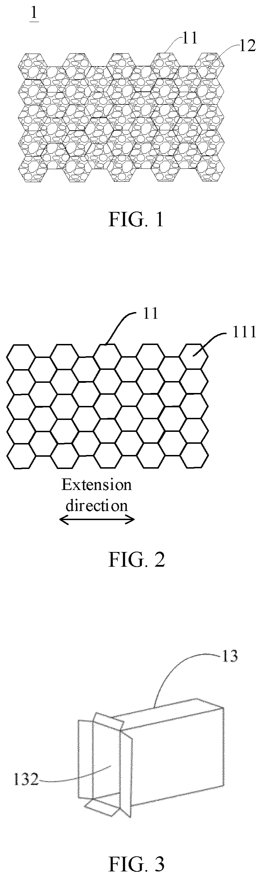

In an aspect of this application, a cooling assembly 1 is provided. Refer to FIG. 1. The cooling assembly 1 includes a framework 11 and a filler 12. Refer to FIG. 2. The framework 11 includes a plurality of holes 111 penetrating the framework 11 in a thickness direction of the framework 11. The filler 12 fills the holes 111, the filler 12 includes a matrix and a liquid phase change medium, and the matrix is a lyophilic polymer material. Specifically, a quantity of the holes 111 in the framework 11 is not particularly limited, and the dimension of each hole 111 is not particularly limited. For example, for a rectangular framework 11, holes 111 may be formed on the entire framework 11, and a gel-like filler is filled in the holes 111. The framework 11 plays a role in shaping the filler.

In the cooling assembly 1 in this application, the filler is disposed in the hole 111 of the framework 11. The framework 11 supports the matrix and plays a role in shaping the filler to prevent the filler from deformation. The filler is filled in the framework 11. The cooling assembly 1 may be placed horizontally or vertically based on a structure of a to-be-cooled heat dissipation component, so that the cooling assembly 1 is closer to a surface of the to-be-cooled heat dissipation component, thereby improving a response speed and a response time of heat dissipation. In addition, the matrix in the filler includes a lyophilic networked polymer material, and the matrix can absorb and retain a large amount of liquid phase change medium to maintain structural integrity. A process in which the liquid phase change medium absorbs heat includes two processes: single-phase heat absorption and latent heat of vaporization. The latent heat of vaporization is high and can quickly absorb a large amount of heat. Therefore, when the cooling assembly 1 is disposed on a surface of a battery, the cooling assembly can quickly and efficiently absorb heat dissipated by a single cell due to thermal runaway caused by overcharging, collision, or the like. In addition, the hole 111 in the framework 11 penetrates the framework 11 to further improve exhaust effect.

Specifically, the matrix in the filler is a lyophilic polymer material, such as starch, cellulose, polyethylene glycol, sodium alginate, hydrogel, sodium polyacrylate, or the like. A liquid phase change material may be water, ethanol, or the like. The lyophilic polymer material can absorb and retain a large amount of water (up to 99%) or other liquids due to a cross-linked network structure and a large quantity of lyophilic groups. While retaining a large amount of liquids, a polymer network structure can maintain its integrity, preventing issues such as liquid flow. These properties give lyophilic polymer materials such as hydrogels great potential in harnessing cooling power of water.

According to some embodiments of this application, the framework 11 is a flexible framework. Therefore, the flexible framework has strong stretchability, so that the cooling assembly 1 can be attached to the surface of the to-be-cooled heat dissipation component to dissipate heat quickly.

Refer to FIG. 2. According to some embodiments of this application, any two adjacent holes 111 on the flexible framework are directly connected. That is, the entire flexible framework is provided with holes 111. Further, holes 111 of a uniform dimension are provided on the flexible framework. According to some embodiments of this application, a shape of the hole 111 is not particularly limited, for example, may be one or a combination of a triangle, a quadrilateral, a rhombus, or a hexagon. When the entire framework 11 is provided with holes 111 with a honeycomb-shaped (hexagonal) structure, the filler may be evenly filled in the honeycomb holes 111. Because the honeycomb structure has extremely high strength and torque, strength and torque of the framework 11 may be enhanced accordingly. When the cooling assembly 1 is disposed between cells, between a cell and a protective plate, between a cell and a cooling plate, or between a cell and a tray, strength and torque of the battery pack may be improved, enabling the battery pack to be a "crash-resistant battery pack".

Refer to FIG. 3. According to some embodiments of this application, to improve the strength of the framework 11, the cooling assembly 1 further includes an encapsulation film 13, where an accommodation cavity 132 is formed inside the encapsulation film 13, and the framework 11 is disposed within the accommodation cavity 132. Therefore, after a high heat absorption material absorbs heat, an absorbed liquid vaporizes to generate gas, and the gas is sealed in the accommodation cavity 132. Due to poor thermal conductivity of the gas, heat transfer is reduced. In addition, the encapsulation film 13 wraps the framework 11 to prevent the filler 12 in the framework 11 from falling off.

It should be noted that a specific shape of the encapsulation film 13 is not particularly limited and may be designed based on a specific shape of the framework 11. For example, the encapsulation film 13 may be rectangular-shaped. The accommodation cavity 132 is formed inside the rectangular-shaped encapsulation film 13. The framework 11 is in close contact with two large surfaces of the rectangle. The heat absorption material absorbs a liquid and becomes gel and then adheres to the two large surfaces of the encapsulation film 13. A side surface of the rectangular-shaped encapsulation film 13 may be sealed through heat sealing.

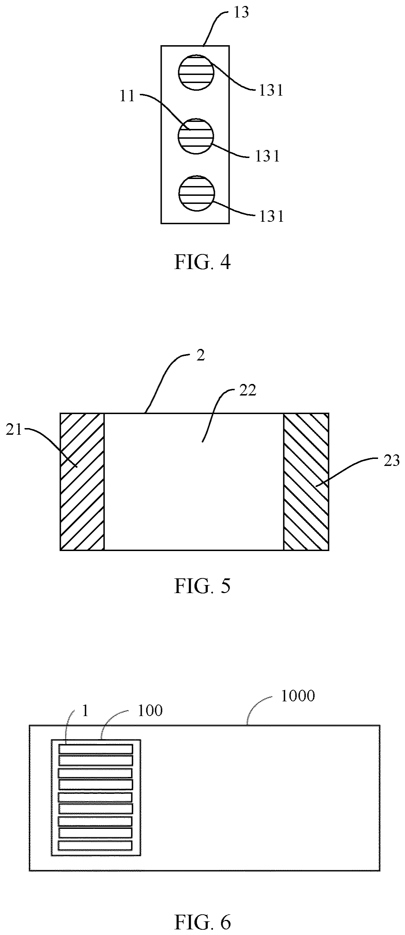

Refer to FIG. 4. According to some embodiments of this application, in addition to heat transfer reduction through gas, heat may alternatively be conducted out of the accommodation cavity 132 by providing an opening 131 on the encapsulation film 13. To be specific, the opening 131 configured to communicate the accommodation cavity 132 with the outside of the encapsulation film 13 is provided on the encapsulation film 13. Specifically, when the cooling assembly 1 is used to dissipate heat from the cell, an exhaust channel may be disposed in the battery pack. Gas generated by vaporization of the heat absorption material is introduced into the exhaust channel through the opening 131, and then conducted out through the exhaust channel to the outside of the battery pack, thereby dissipating heat from the cell.

According to some embodiments of this application, a quantity and locations of the openings 131 are not particularly limited, and may be designed by a person skilled in the art based on a specific purpose of the cooling assembly 1. For example, the encapsulation film 13 has a first surface and a second surface at two ends in an extension direction of the framework 11, and the opening 131 is provided on the first surface and/or the second surface. Therefore, when the cooling assembly is used to dissipate heat from the cell, it is more convenient to design the exhaust channel in the battery pack.

According to some embodiments of this application, a dimension of the framework 11 between two adjacent holes 111 in the extension direction of the framework 11 is a, and satisfies 0.05 mm ≤ a ≤ 10 mm. To be specific, a wall thickness between two adjacent holes 111 may be 0.1 mm, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5mm, or the like. Specifically, the framework 11 may be designed based on a purpose and a specific location of the cooling assembly 1 to satisfy a specific strength requirement.

According to some embodiments of this application, a dimension of the framework 11 in the thickness direction of the framework is b, and satisfies 1.5 mm ≤ b ≤ 2.5 mm. To be specific, when the entire framework 11 is provided with holes 111, a dimension of a wall of the holes 111 in the thickness direction of the framework 11 may be 1.7 mm, 1.9 mm, 2.1 mm, 2.3 mm, or the like. It should be noted that the thickness direction of the framework 11 intersects with the extension direction of the framework 11. Specifically, the thickness direction of the framework 11 is perpendicular to the extension direction of the framework 11.

According to some embodiments of this application, the encapsulation film 13 may further include a plurality of the frameworks 11, and the plurality of the frameworks 11 are disposed in the thickness direction of the framework 11. Therefore, the plurality of the frameworks 11 may be filled with more high heat absorption materials, thereby improving a heat absorption capacity of the cooling assembly 1 and further improving heat dissipation efficiency. In addition, the plurality of the frameworks 11 are disposed in the thickness direction of the framework, so that strength of the cooling assembly and impact resistance of the battery pack may be improved.

The following describes in detail materials for forming the framework 11 and the encapsulation film 13, and material selection for the filler. The materials in this application are all existing materials, and this application does not improve the materials.

According to some embodiments of this application, the material forming the framework 11 is one of paper, aluminum, or fiber. Therefore, the material has specific stretchability and flexibility, and may be attached to the surface of the to-be-cooled heat dissipation component to improve heat dissipation effect.

According to some embodiments of this application, the matrix is one of starch, cellulose, polyethylene glycol, sodium alginate, hydrogel, or sodium polyacrylate. The liquid phase change medium may be water, ethanol, or ethylene glycol. The liquid phase change medium may be selected based on a use environment. Therefore, the filler may still play a heat absorption function after high pressure is cut off. The liquid phase change medium has a high latent heat of vaporization and can quickly absorb heat. During the heat absorption process, heat can be absorbed through two processes: liquid single-phase heat absorption and latent heat of vaporization, thereby further improving heat dissipation effect. In addition, a lyophilic polymer material can absorb liquids that are hundreds to thousands times heavier than the material, and has good liquid retention properties. When the matrix absorbs a liquid and becomes a gel, it is difficult to separate the liquid even if the matrix is pressurized. When the matrix is a polyacrylic acid polymer, there are lower production costs, a simpler production process, higher production efficiency, better liquid absorption, and a longer product shelf life. After absorbing the liquid phase change material, the matrix becomes less mobile and can be shaped with the help of a simple structure. In addition, the matrix is non-conductive, so that it can be further used in the battery pack to dissipate heat from the cell.

According to some embodiments of this application, the encapsulation film 13 is one of a polyimide film, an aluminum-plastic film, a polypropylene film, a polyethylene terephthalate film, or a thermally conductive silica gel. Therefore, the flexible film may be closely attached to the surface of the framework 11, further preventing the framework 11 from collapsing.

In another aspect of this application, a battery pack is provided, including a plurality of cells and the aforementioned cooling assembly 1. Therefore, the battery pack has all the features and advantages of the aforementioned cooling assembly 1. Details are not described herein again. In general, the vehicle at least has the advantage of higher safety.

According to some embodiments of this application, the cooling assembly 1 may be disposed on at least one surface of the cell 2. Therefore, the filler of the cooling assembly 1 is disposed in the hole 111 of the framework 11. The framework 11 supports the matrix and plays a role in shaping the filler to prevent the filler from deformation. The filler is filled in the framework 11. The cooling assembly 1 may be placed horizontally or vertically based on a structure of a to-be-cooled heat dissipation component, so that the cooling assembly 1 is closer to a surface of the to-be-cooled heat dissipation component, thereby improving a response speed and a response time of heat dissipation. In addition, the filler includes the liquid phase change medium, and a process in which the liquid phase change medium absorbs heat includes two processes: single-phase heat absorption and latent heat of vaporization. The latent heat of vaporization is high. When the cell emits heat due to thermal runaway caused by overcharging, collision, or the like, the cooling assembly can directly and quickly absorb a large amount of heat. In addition, the hole 111 in the framework 11 penetrates the framework 11 to further improve exhaust effect of the battery. When the hole 111 in the framework 11 is honeycomb-shaped, strength and torque of the cooling assembly 1 may be further improved, thereby improving strength and torque of the battery pack, and enabling the battery pack to be a "crash-resistant battery pack".

According to some embodiments of this application, the cooling assembly 1 may be disposed in a high heat generation area of the cell 2 to quickly absorb the heat emitted by the cell 2. Refer to FIG. 5. According to some specific embodiments of this application, a surface of the cell 2 includes a first area 21, a second area 22, and a third area 23. The first area 21 and the third area 23 are disposed at two ends of the second area 22 in an extension direction of the cell 2, and the cooling assembly 1 is disposed in at least one of the first area 21 and the third area 23. According to some specific embodiments of this application, the cooling assembly 1 is disposed in both the first area 21 and the third area 23 to quickly dissipate heat from the cell 2 and improve heat dissipation effect. According to some embodiments of this application, the two ends of the cell 2 in the extension direction to positions 1/5 from the two ends are the first area 21 and the third area 23, respectively, and the cooling assembly 1 may be disposed in the two areas to dissipate heat for the cell 2.

In still another aspect of this application, a vehicle 1000 is provided. Refer to FIG. 6. The vehicle 1000 includes the aforementioned battery pack 100. Therefore, the vehicle has all the features and advantages of the aforementioned battery pack. Details are not described herein again. In general, the vehicle at least has the advantage of higher safety.

In the descriptions of this application, it should be understood that, directions or location relationships indicated by terms such as "center", "longitudinal", "lateral", "length", "width", "thickness", "above", "below", "front", "back", "left", "right", "vertical", "horizontal", "top", "bottom", "inside", "outside", "clockwise", "counterclockwise", "an axial direction", "a radical direction", "a circumferential direction", and the like are based on the directions or position relationships shown in the accompanying drawings, and are merely intended to describe this application and simplify the descriptions, but are not intended to indicate or imply that an indicated apparatus or element needs to have a specific direction or be constructed and operated in a specific direction, and therefore cannot be understood as a limitation on this application.

In addition, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise specifically limited, "a plurality of" means two or more.

In this application, unless otherwise specified and limited, the terms such as "mount", "link", "connect", and "fasten" should be understood broadly. For example, the term "connect" may be a fixed connection, may be a detachable connection, or may be integration; may be a mechanical connection or may be an electrical connection; or may be a direct connection, may be an indirect connection implemented by using an intermediate medium, or may be communication inside two elements or an interaction relationship between two elements. A person of ordinary skill in the art may understand specific meanings of the foregoing terms in this application based on specific situations.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above", "over", or "on top of" the second feature may be that the first feature is right above or obliquely above the second feature, or merely mean that a horizontal height of the first feature is greater than that of the second feature. That the first feature is "below", "under", or "beneath" the second feature may be that the first feature is right below or obliquely below the second feature, or merely mean that a horizontal height of the first feature is less than that of the second feature.

In the descriptions of this specification, the reference terms "an embodiment", "some embodiments", "an example", "a specific example", or "some examples" and the like mean that the specific features, structures, materials, or characteristics described with reference to the embodiment or example are included in at least one embodiment or example of this application. In this specification, the exemplary expressions of the foregoing terms need not be directed to the same embodiment or example. In addition, in the descriptions of this specification, the described specific features, structures, materials, or characteristics may be combined in a proper manner in any one or more of embodiments or examples. In addition, a person skilled in the art may combine and associate different embodiments or examples and features of different embodiments or examples described in this specification without mutual contradiction.

Although embodiments of this application have been shown and described above, it is understood that the foregoing embodiments are exemplary and are not to be construed as limitations on this application. A person of ordinary skill in the art may change, modify, replace and vary the foregoing embodiments within the scope of this application.

## Claims

1. A cooling assembly (1), comprising:
a framework (11), wherein the framework (11) comprises a plurality of holes (111) penetrating the framework (11) in a thickness direction of the framework (11); and
a filler (12), wherein the filler (12) fills the holes (111), the filler (12) comprises a matrix and a liquid phase change medium, and the matrix is a lyophilic polymer material.

2. The cooling assembly (1) according to claim 1, wherein any two adjacent holes (111) in the framework (11) are directly connected.

3. The cooling assembly (1) according to claim 1 or 2, further comprising:
an encapsulation film (13), wherein an accommodation cavity (132) is formed inside the encapsulation film (13), and the framework (11) is disposed within the accommodation cavity (132).

4. The cooling assembly (1) according to claim 3, wherein the encapsulation film (13) is provided with an opening (131) configured to communicate the accommodation cavity (132) with the outside of the encapsulation film (13).

5. The cooling assembly (1) according to claim 3 or 4, wherein the encapsulation film (13) has a first surface and a second surface at two ends in an extension direction of the framework (11), and the opening (131) is provided on the first surface and/or the second surface.

6. The cooling assembly (1) according to any one of claims 1 to 5, wherein a dimension of the framework (11) between two adjacent holes (111) in the extension direction of the framework (11) is a, and satisfies 0.05 mm ≤ a ≤ 10 mm.

7. The cooling assembly (1) according to any one of claims 1 to 6, wherein a dimension of the framework (11) in the thickness direction of the framework (11) is b, and satisfies 1.5 mm ≤ b ≤ 2.5 mm.

8. The cooling assembly (1) according to any one of claims 3 to 7, wherein the encapsulation film (13) comprises a plurality of the frameworks (11), and the plurality of the frameworks (11) are disposed in the thickness direction of the framework (11).

9. The cooling assembly (1) according to any one of claims 1 to 8, wherein the framework (11) is a flexible framework.

10. The cooling assembly (1) according to claim 9, wherein a material forming the flexible framework is one of paper, aluminum, or fiber.

11. The cooling assembly (1) according to any one of claims 1 to 10, wherein the matrix is one of starch, cellulose, polyethylene glycol, sodium alginate, hydrogel, or sodium polyacrylate.

12. A battery pack (100), comprising a plurality of cells and the cooling assembly (1) according to any one of claims 1 to 11.

13. The battery pack (100) according to claim 12, wherein the cooling assembly (1) is disposed on at least one surface of the cell.

14. The battery pack (100) according to claim 12 or 13, wherein a surface of the cell comprises a first area (21), a second area (22), and a third area (23), the first area (21) and the third area (23) are disposed at two ends of the second area (22) in an extension direction of the cell, and the cooling assembly (1) is disposed in at least one of the first area (21) and the third area (23).

15. A vehicle (1000), comprising the battery pack (100) according to any one of claims 12 to 14.
